# EUROPÄISCHE PATENTSCHRIFT

(11) **EP 1 646 521 B1**
(45) Veröffentlichungstag und Bekanntmachung des Hinweises auf die Patenterteilung: **15.10.2008**
(21) Anmeldenummer: 04738901.0
(22) Anmeldetag: 08.07.2004
(51) Int. Cl.: B60J 7/12, B60J 7/20

(54) **CABRIOLET-FAHRZEUG SOWIE GELENKVORRICHTUNG**
CABRIOLET VEHICLE AND ARTICULATED DEVICE
VEHICULE CABRIOLET ET SYSTEME ARTICULE

(30) Priorität: 11.07.2003 DE 10331392
(43) Veröffentlichungstag der Anmeldung: 19.04.2006
(73) Patentinhaber: Wilhelm Karmann GmbH, 49084 Osnabrück (DE)
(72) Erfinder: BUNSMANN, Winfried, 49143 Bissendorf (DE); BROCKHOFF, Franz-Ulrich, 49565 Bramsche (DE); LICHER, Siegfried, 49124 Georgsmarienhütte (DE)
(86) Internationale Anmeldenummer: PCT/DE2004/001485
(87) Internationale Veröffentlichungsnummer: WO 2005/007428

(56) Entgegenhaltungen:
- DE-A- 19 912 358
- DE-U- 9 419 035
- US-A- 6 048 021
- US-A- 6 145 915

## Beschreibung

Die Erfindung betrifft ein Cabriolet-Fahrzeug gemäß Oberbegriff von Anspruch 1, sowie eine zwischen einer Heckklappe eines Cabriolet-Fahrzeugs und einem Spannbügel zum Spannen des Hinterrandes des Faltverdecks angeordnete Gelenkvorrichtung gemäß Anspruch 7.

Cabriolet-Fahrzeuge erfreuen sich zunehmender Beliebtheit. Bei Fahrzeugen mit kurzem Heck ergibt sich eine kleine lichte Weite zwischen dem den Hinterrand des Faltverdecks nach unten abspannenden Verdeckspannbügel und der Ladekante des Kofferraums. Diese geringe lichte Weite, die als Belademaß (L206) bezeichnet wird, ist allenfalls bei geöffnetem Verdeck hinnehmbar, wenn das geöffnete und größtenteils im Kofferraum eingestaute Verdeck das Volumen des Kofferraums stark einschränkt. Bei geschlossenem Verdeck ist das verringerte Belademaß jedoch sehr nachteilig, da das Fassungsvermögen des Kofferraums dann durch das Verdeck kaum eingeschränkt ist und auch größere Gegenstände aufnehmen kann.

In dem deutschen Gebrauchsmuster DE 94 19 035 U1 wird vorgeschlagen, den Hinterrand des Faltverdecks unmittelbar an der Heckklappe zu befestigen, so dass zumindest der rückwärtige Bereich des Verdecks beim Öffnen der Heckklappe entsprechend mitgeöffnet wird und das Belademaß durch das Faltverdeck nicht beeinträchtigt ist. Eine Eigenart dieses Vorschlags besteht darin, dass das geöffnete Faltverdeck auf der Heckklappe liegt und einer Öffnung der Heckklappe insgesamt folgen muss, wodurch die Verdeckkinematik eingeschränkt ist.

Der Erfindung liegt die Aufgabe zugrunde, Abhilfe für das Problem zu schaffen, dass bei mit Faltverdeck ausgerüsteten Fahrzeugen mit kurzem Heck bei geschlossenem Verdeck die Beladbarkeit des Kofferraums erheblich eingeschränkt ist, ohne dass die vorgenannten Einschränkungen der Verdeckkinematik bestehen.

Diese Aufgabe wird mit einem Cabriolet-Fahrzeug gemäß dem Anspruchs 1 gelöst.

Bei dem erfindungsgemäßen Cabriolet-Fahrzeug umschließt die Heckklappe den Spannbügel des Faltverdecks von hinten her, so dass sie entsprechend der Form des Spannbügels ausgespart ist, wobei insbesondere im mittleren Bereich des Fahrzeugs der Hinterrand der Heckklappe nur geringfügig hinter dem Spannbügel angeordnet sein kann. Der Spannbügel und die Heckklappe sind in eigenen Lagern an der Karosserie gelagert, wobei für die Freigabe einer adäquaten Gepäckeinladeöffnung der Spannbügel beim Öffnen der Heckklappe koordiniert zur Öffnungsbewegung der Heckklappe oder unabhängig von der Heckklappe aufwärts verschwenkt werden kann.

Die Unteransprüche 2 bis 15 sind auf vorteilhafte Ausführungsformen und Weiterbildungen des erfindungsgemäßen Cabriolet-Fahrzeugs und der erfindungsgemäßen Gelenkvorrichtung gerichtet.

Bei dem erfindungsgemäßen Fahrzeug besteht bezüglich des Designs weitgehende Freiheit; wenn der Vorderrand der Heckklappe in deren geschlossenen Zustand den Spannbügel überlagert, wird ein elegantes Aussehen des geschlossenen Cabriolet-Fahrzeugs erreicht. Das Faltverdeck lässt sich vorteilhafter Weise insgesamt auf ein Niveau im Bereich oder unterhalb des Vorderrandes der Heckklappe absenken.

Die Erfindung wird im Folgenden anhand schematischer Zeichnungen beispielsweise und mit weiteren Einzelheiten erläutert.

Es stellen dar:
- Figur 1: eine Seitenansicht der hinteren Hälfte eines herkömmlichen Cabriolet-Fahrzeugs zur Verdeutlichung der Erfindungsproblematik,
- Fig. 2: eine Seitenansicht eines erfindungsgemäßen Cabriolet-Fahrzeugs,

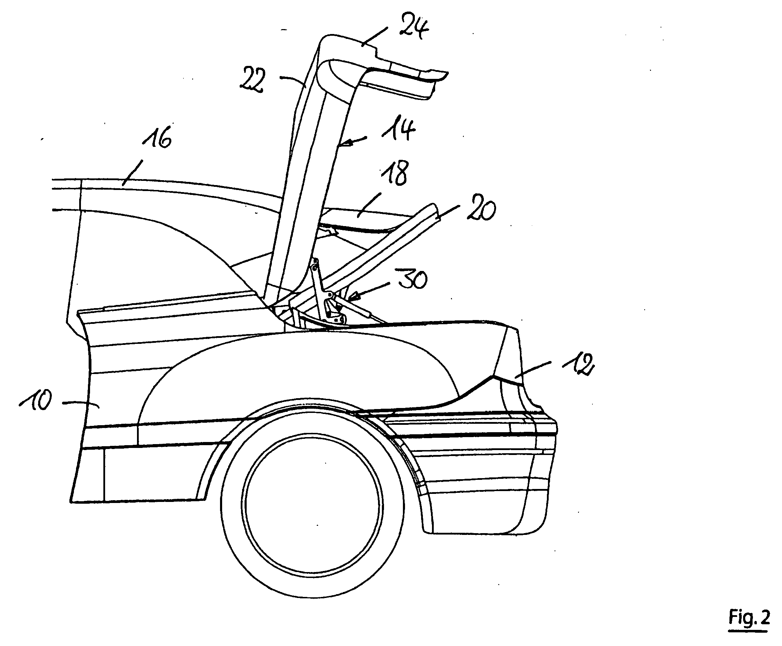

- Fig. 2: eine Seitenansicht eines erfindungsgemäßen Cabriolet-Fahrzeugs,

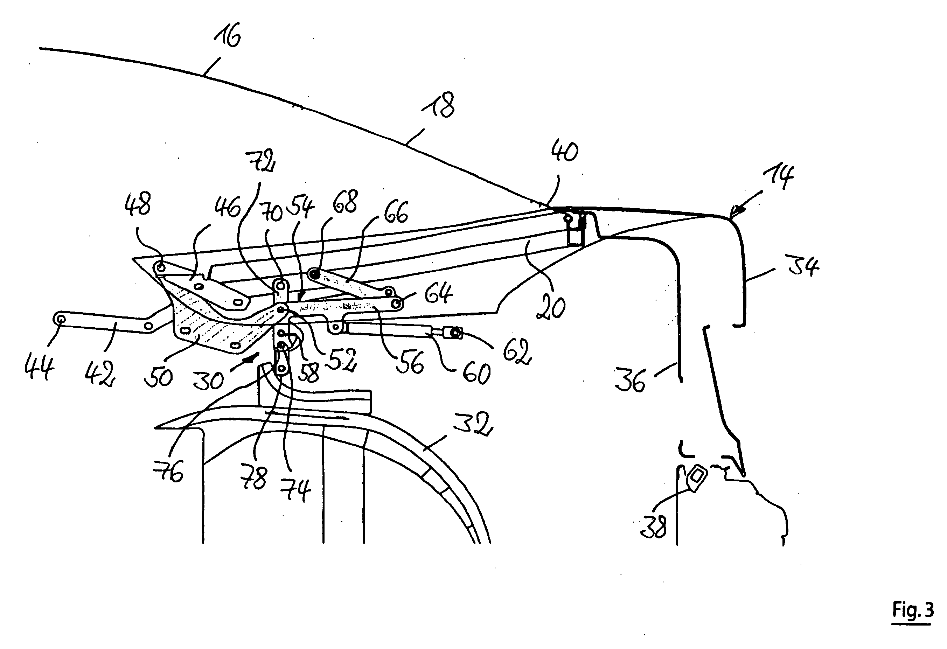

- Fig. 3: eine Seitenansicht auf das erfindungsgemäße Fahrzeug bei abgenommener Außenhaut, teilweise im Schnitt, und geschlossener Heckklappe sowie geschlossenem Faltverdeck,

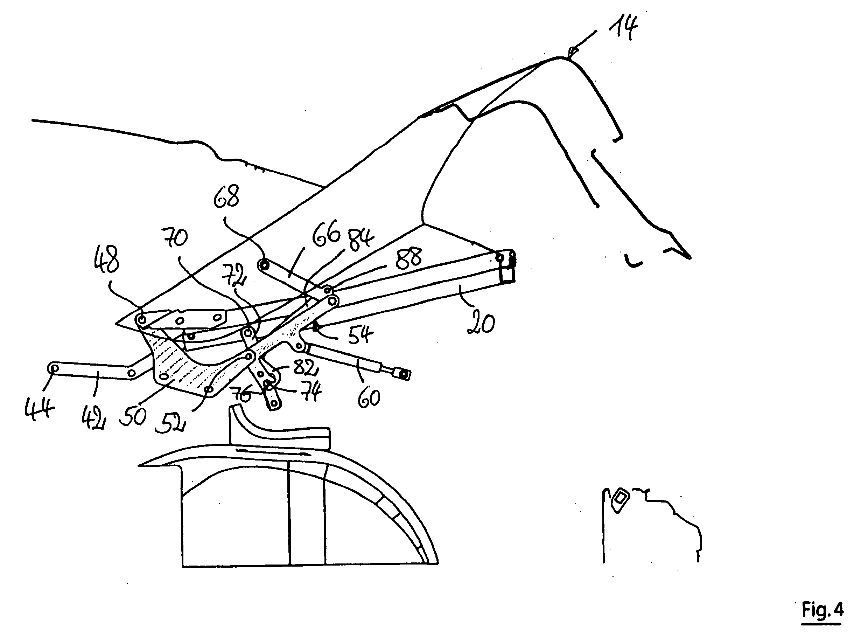

- Fig. 4: eine Ansicht ähnlich der Fig. 3 bei teilweise geöffneter Heckklappe,

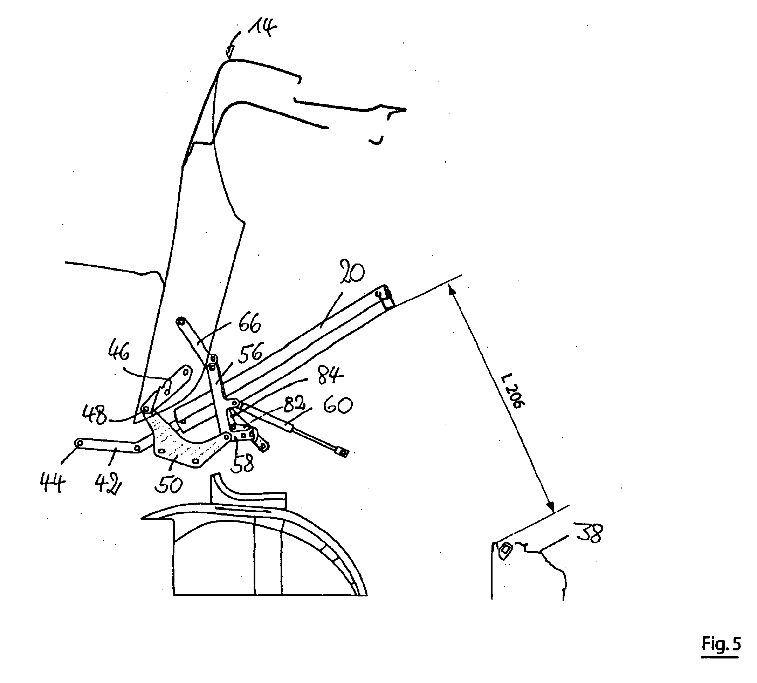

- Fig. 5: eine Ansicht ähnlich der Fig. 3 bei vollständig geöffneter Heckklappe,

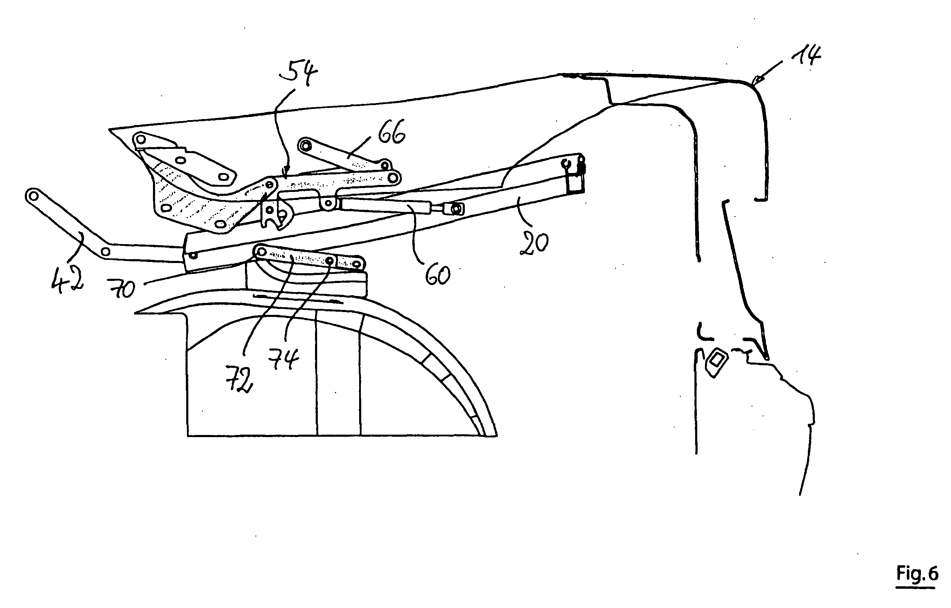

- Fig. 6: eine Ansicht ähnlich der Fig. 3 bei infolge geöffneten Verdecks abgesenktem Spannbügel,

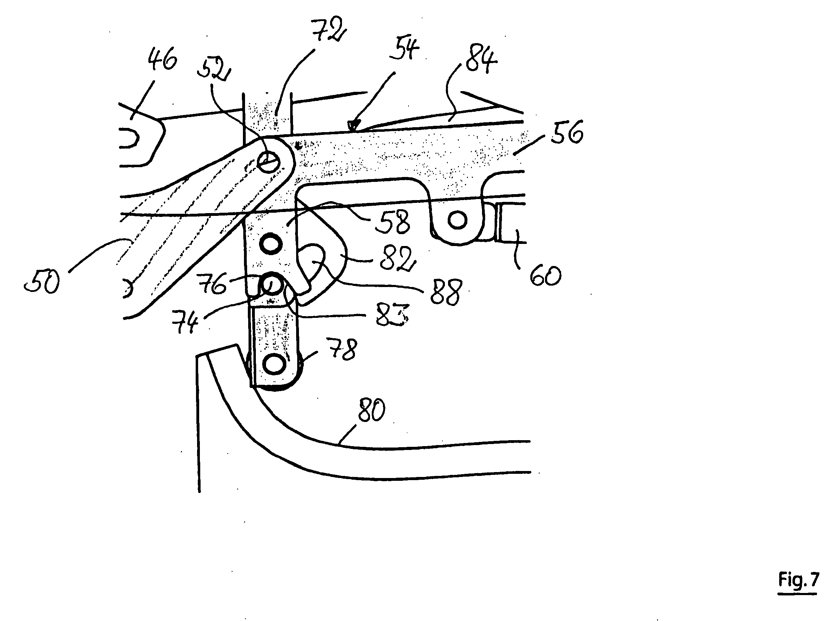

- Fig. 7: ein Detail der erfindungsgemäßen Gelenkvorrichtung,

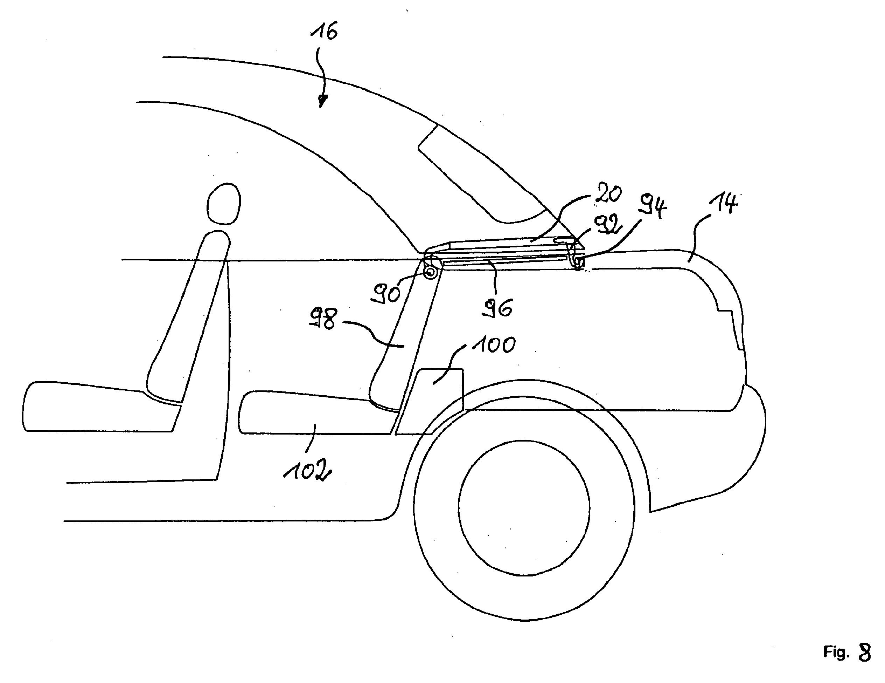

- Fig. 8: eine Seitenansicht, teilweise im Schnitt der hinteren Hälfte einer weiteren Ausführungsform eines erfindungsgemäßen Cabriolet-Fahrzeugs,

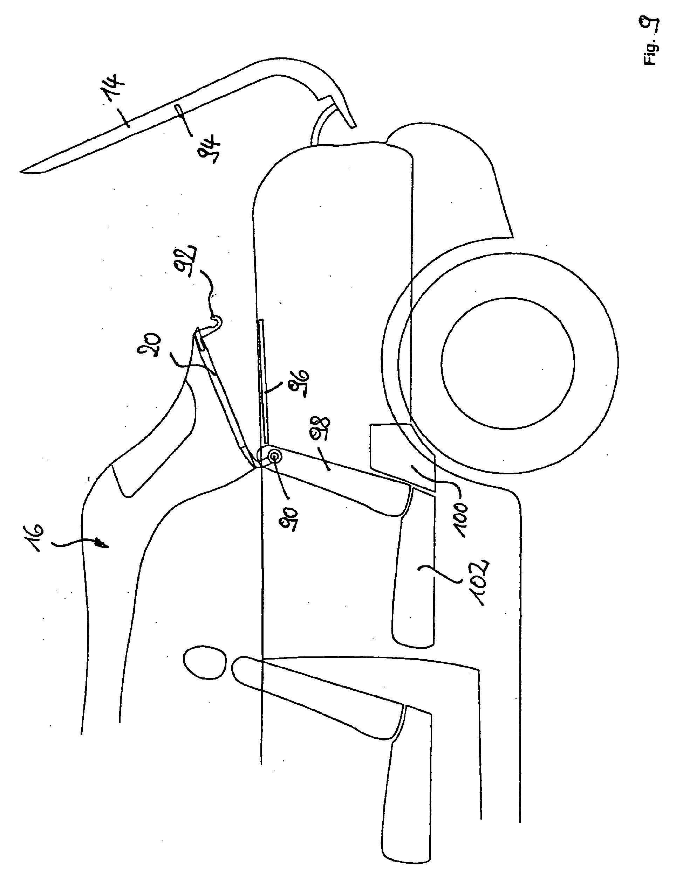

- Fig. 9: eine Ansicht ähnlich der Figur 8 bei nach hinten geöffneter Heckklappe und aufwärts verschwenktem Spannbügel,

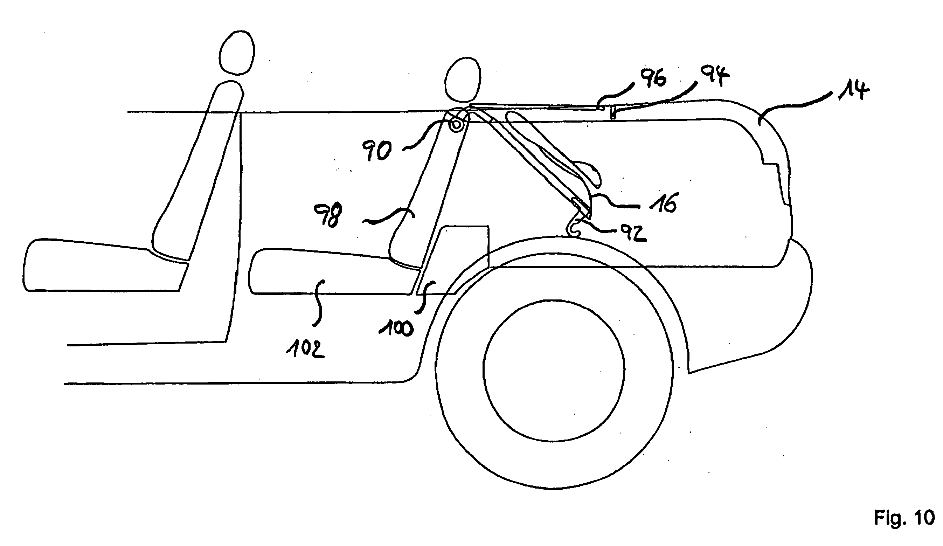

- Fig. 10: eine Ansicht ähnlich der Figur 8 bei vollständig geöffnetem Verdeck und geschlossener Heckklappe,

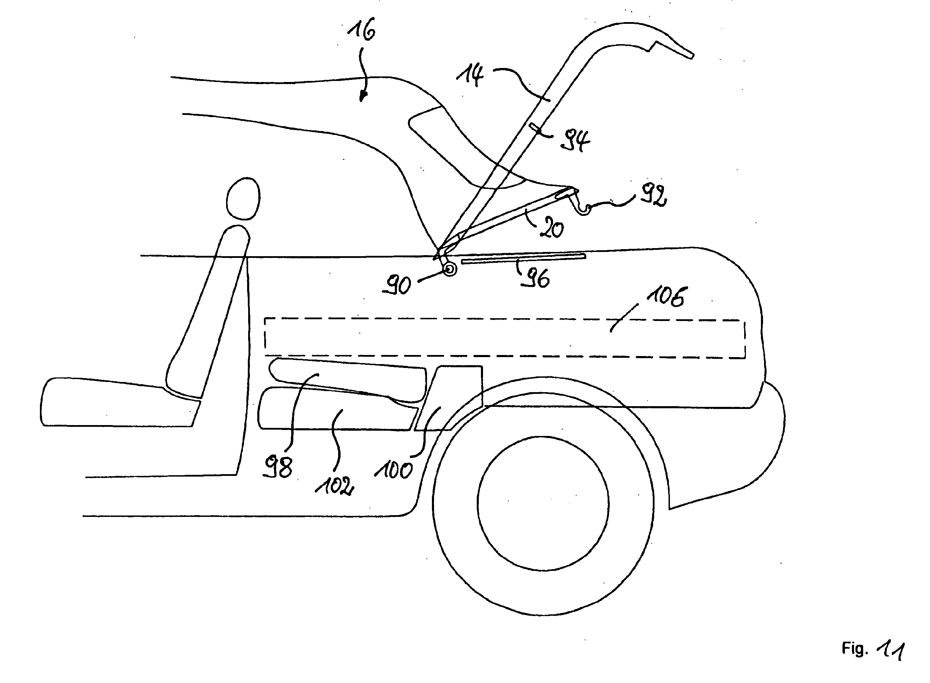

- Fig. 11: eine Ansicht ähnlich der Figur 8 bei angehobenem Spannbügel und nach vorne geöffneter Heckklappe,

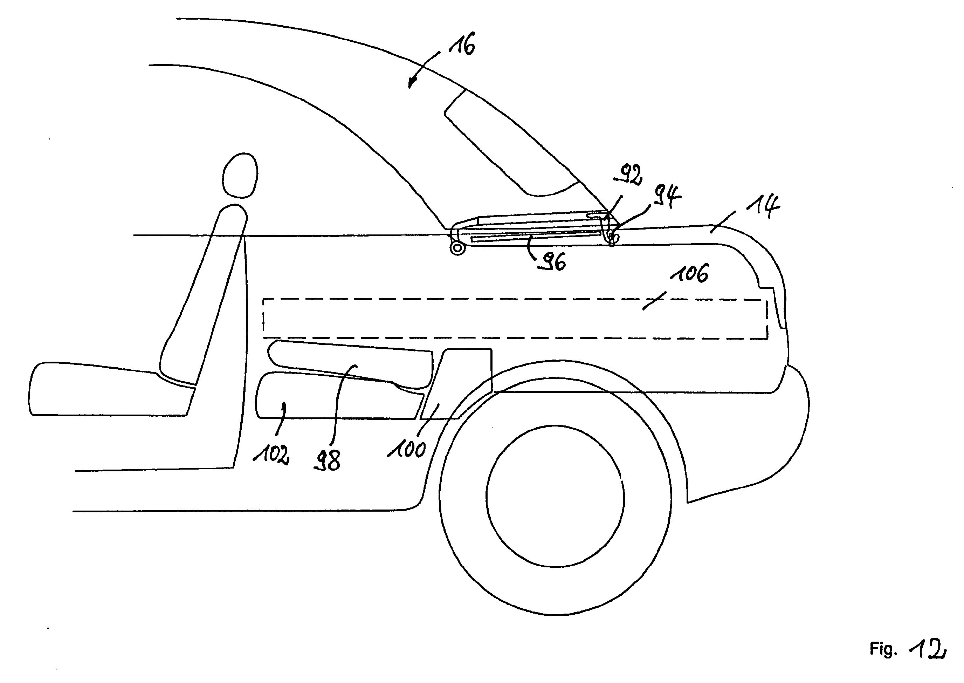

- Fig. 12: eine Ansicht ähnlich der Figur 11 bei geschlossenem Verdeck und

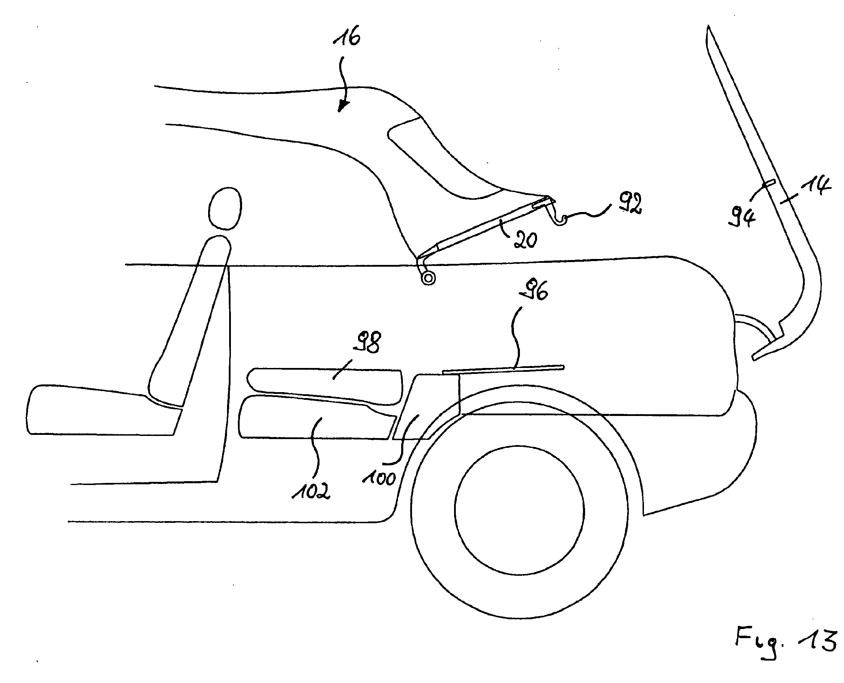

- Fig. 13: eine Ansicht ähnlich der Figur 8 bei vollständig in rückwärtiger Richtung geöffneter Heckklappe und

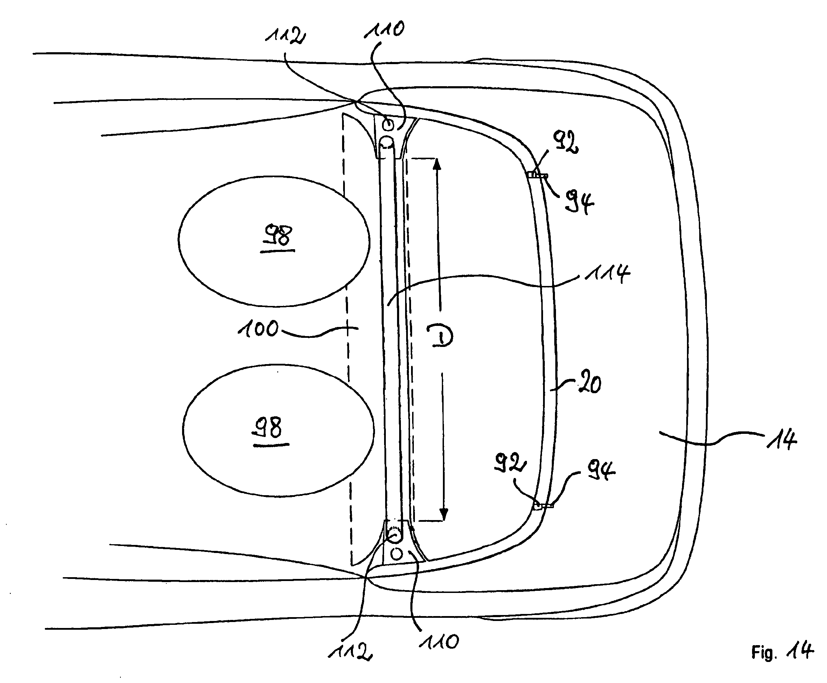

- Fig. 14: eine Aufsicht auf das Fahrzeug gemäß Figur 8 bei mit Ausnahme des Spannbügels abgenommenem Verdeck.

Im Folgenden werden der Begriff vorne zur Bezeichnung der Vorwärtsrichtung eines Cabriolet-Fahrzeugs und der Begriff hinten zur Bezeichnung der Rückwärtsrichtung des Fahrzeugs verwendet; die seitlichen Richtungen sind die Richtungen quer zur senkrechten Fahrzeuglängsmittelebene.

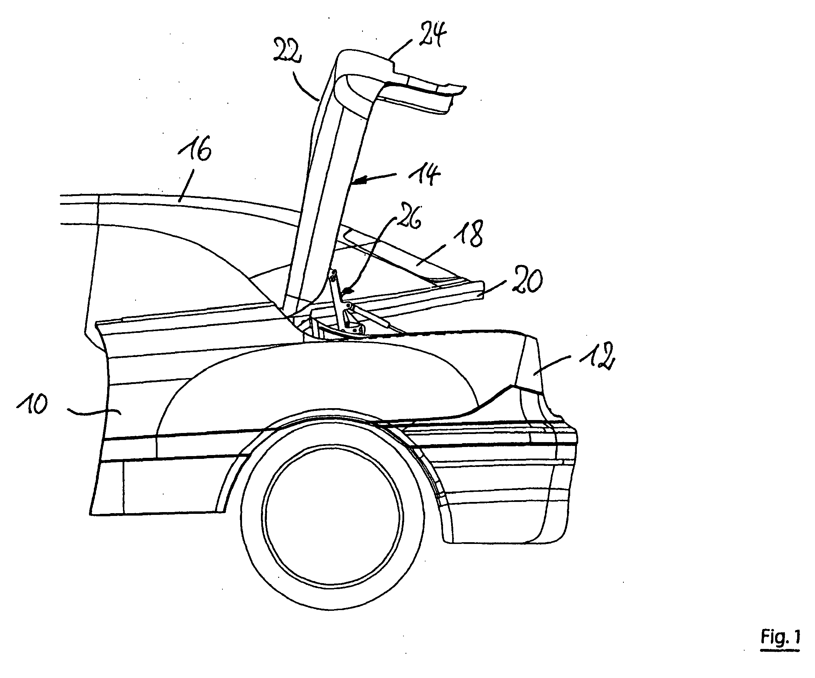

Gemäß Fig. 1 weist ein Cabriolet-Fahrzeug, von dem die hintere Hälfte in Seitenansicht dargestellt ist, eine Karosserie mit einem hinteren Seitenteil 10 und einem Heckabschlussteil 12 auf, wobei ein Kofferraum mittels einer an der Fahrzeugstruktur jeweils seitlich gelenkig gelagerten Heckklappe 14 verschließbar ist.

Das Fahrzeug weist ein im dargestellten Zustand geschlossenes Faltverdeck 16 auf, das eine bevorzugt faltbare Heckscheibe 18 aufweist, und dessen Hinterrand in an sich bekannter Weise an einem Spannbügel 20 befestigt ist, der mittels eines nicht dargestellten von Hand oder motorisch betätigbaren Mechanismus in eine Stellung spannbar ist, in der das Faltverdeck einwandfrei gespannt ist. Wie ersichtlich ist das Fahrzeug mit einem verhältnismäßig kurzen Heck ausgebildet, so dass die Oberseite 22 der Heckklappe 14, die entsprechend dem Spannbügel 20 ausgeschnitten ist, im Bereich der Fahrzeugmitte den Spannbügel 20 nach hinten nur wenig überragt und der Kofferraum im Wesentlichen durch die abgebogene Heckwand 24 der Heckklappe 14 verschlossen wird. Damit sich die Heckklappe 14 aus einer Schließstellung, in der sie den Spannbügel 20 bündig umfasst oder überlagert, in die dargestellte Offenstellung bewegen lässt, ist ein an sich bekannter und nicht im Einzelnen erläuterter Gelenkmechanismus 26 vorgesehen, mittels dessen die Heckklappe 22 an der Fahrzeugstruktur befestigt ist.

Wie ersichtlich, ist die Beladbarkeit des Kofferraums durch den weit nach hinten ragenden Spannbügel 20 eingeschränkt.

Zur Abhilfe dieses Problems ist erfindungsgemäß das Fahrzeug, wie in Fig. 2 dargestellt, ausgebildet, wobei in Fig. 2 für denen der Fig. 1 entsprechende Bauteile, soweit diese nicht nochmals erläutert werden, die gleichen Bezugszeichen wie in Fig. 1 verwendet werden.

Wie aus einem Vergleich der Fig. 2 mit Fig. 1 ersichtlich, unterscheiden sich die beiden Fahrzeuge vor allem dadurch, dass der Spannbügel 20 bei dem erfindungsgemäßen Fahrzeug aufwärts verschwenkt ist, so dass die Beladbarkeit des Kofferraums erheblich weniger eingeschränkt wird. Erreicht wird dies durch eine Gelenkvorrichtung 30, die im Folgenden anhand der Fig. 3 bis 7 genauer erläutert wird.

In Fig. 3 ist die bezogen auf die Fahrzeuglängsrichtung an der linken Seite des Fahrzeugs vorgesehene Gelenkvorrichtung 30 dargestellt. An der rechten Seite des Fahrzeugs befindet sich eine weitere, nicht dargestellte Gelenkvorrichtung 30. Von der Karosserie ist in Fig. 3 schematisch das linksseitige Radhaus 32 dargestellt. Weiter ist die Heckklappe 14 im Schnitt mit Außenblech 34 und Innenblech 36 sichtbar. Die Heckklappe liegt unten auf dem Heckabschlussträger 38 auf, der gleichzeitig die Ladekante bildet.

Der hintere untere Rand 40 des Faltverdecks 16 ist in an sich bekannter Weise an dem Spannbügel 20 befestigt, der durch eine bügelförmiges Metallprofil gebildet ist, das an den beiden vorderen Enden des Bügels jeweils an einem Hebel 42 gelagert ist, der im Gelenk 44 schwenkbar mit der Karosserie verbunden ist.

Die Heckklappe 14 ist über in ihre vordere Enden integrierte Versteifungsteile 46 in je einem Gelenk 48 schwenkbar an einem karosseriefesten Lagerträger 50 gelagert.

Bezüglich des Fahrzeugs hinter und unterhalb des Gelenkes 48 ist in einem weiteren Gelenk 52 an dem Lagerträger 50 ein insgesamt L-förmiger erster Schwenkhebel 54 gelagert, dessen einer Arm 56 sich im dargestellten geschlossenen Zustand der Heckklappe 14 etwa waagrecht nach hinten erstreckt und dessen anderer Arm 58 von dem Gelenk 52 aus etwa senkrecht nach unten absteht. Etwa mittig am Arm 56 greift eine Gasdruckfeder 60 an, die bei 62 karosseriefest gelagert ist.

Am freien Ende des Arms 56 ist im Gelenk 64 ein zweiter Schwenkhebel 66 schwenkbar gelagert, der in der dargestellten Knickstellung schräg nach vorne und oben verläuft und im Gelenk 68 schwenkbar mit der Heckklappe 14 (in Fig. 3 nicht im Einzelnen dargestellt) verbunden ist.

Zur Verbindung der genannten Bauteile mit dem Spannbügel 20 ist am Spannbügel 20 in der dargestellten Stellung etwa oberhalb des Gelenks 52 im Gelenk 70 ein Koppelhebel 72 schwenkbar gelagert, der mit einem Zapfen 74 in eine Ausnehmung 76 einragt, die am freien Ende des Arms 58 des ersten Schwenkhebels 54 ausgebildet ist. Der Zapfen 74 bildet eine Gelenkachse, um die der Koppelhebel 72 relativ zum ersten Schwenkhebel 54 schwenkbar ist.

Der Koppelhebel 72 ist über den Zapfen 54 hinaus verlängert und trägt an seinem freien Ende eine Rolle 78 zum Abtasten einer karosseriefesten Führungsfläche 80. Die Funktion der Rolle 78 und der Führungsfläche 80 werden weiter unten anhand der Fig. 7 erläutert.

Die Funktion der bisher beschriebenen Bauteile bzw. Gelenkvorrichtung ist die folgende:

Wenn gemäß Fig. 4 die Heckklappe 14 um das Gelenk 48 aufwärts geschwenkt wird, wird das Gelenk 68 zusammen mit der Heckklappe 14 entsprechend aufwärts verschwenkt, wobei sich der Winkel zwischen dem zweiten Schwenkhebel 66 und dem ersten Schwenkhebel 54 vergrößert und der erste Schwenkhebel 54 in Gegenuhrzeigerrichtung um das Gelenk 52 verschwenkt wird. Dabei bewegt sich der Zapfen 74, der die Gelenkverbindung zwischen dem ersten Schwenkhebel 54 und dem Koppelhebel 72 bildet, zunächst auf einem Kreisbogen unterhalb des Gelenks 70, so dass das Gelenk 70 und damit der Spannbügel 20 zunächst kaum angehoben wird, d.h. ein zunächst großer Schwenkwinkel der Heckklappe 14 wird in einen kleinen Schwenkwinkel des Spannbügels 20 umgewandelt, so dass die hohe Spannkraft, die auf das Faltverdeck 16 wirkt, langsam und unter nicht zu großer Drehmomentbelastung der Öffnungsbewegung der Heckklappe 14 abgebaut wird. Während dieser Anfangsphase der Öffnung der Heckklappe 14 wird ein Verriegelungshebel 82 auf weiter unten beschriebene Weise derart verschwenkt, dass er den Zapfen 74 in der Ausnehmung 76 verriegelt, so dass der Zapfen 76 bei nachlassender Verdeckspannung nicht aus der Ausnehmung freikommt.

Beim weiteren Öffnen der Heckklappe 14 (Fig. 5) wird deren Öffnungsbewegung wegen des Auswanderns des Arms 58 aus der Stellung radial zum Gelenk 70 in eine deutlichere Verschwenkung des Spannbügels 20 in Gegenuhrzeigerrichtung umgewandelt, so dass bei voll geöffneter Heckklappe 14 der Spannbügel 20 deutlich angehoben ist und sich das Lademaß L205, d.h. der Abstand zwischen der durch den Heckabschlussträger 38 gebildeten Ladekante und dem Spannbügel 20, auf ein komfortables Maß vergrößert.

Während die Öffnung der Heckklappe anfänglich durch die sich abbauende Verdeckspannung unterstützt wird, wird die weitere Öffnung der Heckklappe dann durch die Gasdruckfeder 60 unterstützt, die die Heckklappe zuverlässig in deren Offenstellung hält.

Beim Schließen der Heckklappe laufen die geschilderten Vorgänge in umgekehrter Reihenfolge ab, wobei das Verdeck in der letzten Phase des Schließens der Heckklappe wiederum zuverlässig gespannt wird.

Wenn das Faltverdeck 16 geöffnet wird, wird es in dem Raum vor dem Vorderrand der Heckklappe 14 eingestaut, wobei der Hebel 42 unter Absenken des Spannbügels 20 in Uhrzeigerrichtung verschwenkt wird und das Verdeck unter Füllen des Raums zwischen dem Spannbügel 20 und der den Spannbügel normalerweise umschließenden Ausnehmung der Oberseite der Heckklappe 14 aufgenommen wird. Beim Öffnen der Heckklappe 14 in diesem geöffneten bzw. zusammengefalteten Zustand des Faltverdecks 16 verbietet sich aus Gründen einer möglichen Beschädigung des Faltverdecks, dass der Spannbügel 20 beim Öffnen der Heckklappe 14 angehoben wird. Damit dies nicht geschieht, wird der Koppelhebel 72 beim Absenken des Spannbügels 20 in dessen abgesenkte, das Verdeck aufnehmende Stellung (Fig. 6) in eine entkoppelte Stellung bewegt, in der die Gelenkverbindung zwischen dem Zapfen 70 des Koppelhebels 72 und dem ersten Schwenkhebel 54 gelöst ist.

Der Ablauf der Entkoppelung wird anhand der Fig. 7 erläutert.

Wenn der Spannbügel 20 abgesenkt wird, gelangt die am freien Ende des Koppelhebels 72 gelagerte Rolle 78 in Anlage an die Führungsfläche 80, die an einer fahrzeugfesten Kulisse ausgebildet ist. Beim weiteren Absenken des Koppelhebels 72 gelangt der Zapfen 74 aus der bevorzugt gemäß Fig. 7 mit einer Schrägung 83 leicht ausgebildeter Ausnehmung 76 am freien Ende des Arms 58 heraus, so dass der Zapfen 74 von der Ausnehmung 76 und damit dem ersten Schwenkhebel 74 freikommt und sich bei zunehmendem Absenken des Spannbügels 20 in die in Fig. 6 gezeigte Stellung bewegt. In dieser Stellung ist der erste Schwenkhebel 54 vom Koppelhebel 72 vollständig entkoppelt, so dass die Heckklappe 14 geöffnet werden kann, ohne dass sich der Spannbügel 20 irgendwie mitbewegt.

Der in Fig. 7 deutlich sichtbare Verriegelungshebel 84 ist bei geschlossener Heckklappe 14 gemäß Fig. 7 in eine Stellung verschwenkt, in der die Herausbewegbarkeit des Zapfens 74 aus der Ausnehmung 76 freigegeben ist. Erreicht wird dies dadurch, dass der Verriegelungshebel 82 an dem Arm 58 angelenkt ist und an seinem anderen Ende (in Fig. 5 sichtbar) mit einem Betätigungshebel 84 gelenkig verbunden ist, der bei 88 (Fig. 4 und 5) mit dem zweiten Schwenkhebel 66 gelenkig verbunden ist. Wenn die beiden Schwenkhebel 54 und 56 aus der maximal geknickten Stellung gemäß Fig. 3 beim Öffnen der Heckklappe 14 verschwenkt werden, wird der Verriegelungshebel 82 in Uhrzeigerrichtung verschwenkt, so dass der untere Rand einer an seinem Ende ausgebildeten seitlichen Ausnehmung 88 den Zapfen 74 hintergreift und in der Ausnehmung 76 verriegelt.

Die beschriebene Ausbildung der Gelenkvorrichtung kann in vielfältiger Weise abgeändert werden. Beispielsweise kann bei vollständig geschlossener Heckklappe und geschlossenem Verdeck 16 der Koppelhebel 72 gegenüber dem Gelenk 52 eine Übertotpunktstellung einnehmen, so dass die Verdeckspannung während der allerletzten Schließphase der Heckklappe zu deren Schließen beiträgt bzw. beim Öffnen der Heckklappe diese nicht sofort in Öffnungsstellung zieht. Das einfache Gelenk 48, mit dem die Heckklappe an der Karosserie gelagert ist, kann durch ein Mehrfachhebel- oder Viergelenkscharnier ersetzt sein. Die Hebelmechanismen können durch andere zweckentsprechende Hebelmechanismen ersetzt werden, mit denen eine funktionale Gelenkvorrichtung geschaffen wird, bei der beim Öffnen der Heckklappe auch der Spannbügel geöffnet wird, wenn das Verdeck geschlossen ist. Bei geöffnetem Verdeck ist die Heckklappe ohne ein Bewegen bzw. Verschwenken des Spannbügels öffenbar.

Anhand der Figuren 8 bis 14 wird im Folgenden eine weitere Ausführungsform eines erfindungsgemäßen Cabriolet-Fahrzeugs beschrieben. Für funktionsähnliche Bauteile werden die gleichen Bezugszeichen wie für die Ausführungsform gemäß Figuren 1 bis 7 verwendet.

Gemäß Figur 8 ist bei dem Cabriolet-Fahrzeug der zweiten Ausführungsform der Heckdeckel 14, der in seinem vorderen Bereich entsprechend dem Spannbügel 20 ausgeschnitten ist, beidseitig karosseriefest um ein Viergelenk (nicht dargestellt) schwenkbar gelagert. Der Spannbügel 20 ist in ähnlicher Weise beidseitig der Karosserie um eine Achse 90 schwenkbar gelagert. An dem Spannbügel 20 ist wenigstens ein nach unten vorstehender Fanghaken 92 befestigt, in den beim Abwärtsschwenken der Heckklappe 14 ein entsprechender, an deren vorderem Rand befestigter Fangbügel 94 eingreift, der den Spannbügel 20 beim Schließen der Heckklappe 14 in Uhrzeigerrichtung nach unten verschwenkt und dabei das Faltverdeck 16 spannt.

Mit 96 ist eine Platten- bzw. fachförmige Hutablage bezeichnet, die beispielsweise in die Innenraumverkleidung hinter einer Rücklehne 98 eines Rücksitzes des Fahrzeugs eingehängt ist. Ein Kraftstofftank 100 kann hinter der Rücksitzlehne 102 und bevorzugt vor der nicht dargestellten Hinterachse des Fahrzeugs flach angeordnet sein. In diesem Bereich kann auch ein Karosseriequerträger (nicht dargestellt) angeordnet sein.

Im dargestellten Beispiel übergreift der Spannbügel 20 den insgesamt entsprechend dem Spannbügel 20 U-förmig ausgebildeten Vorderrand der Heckklappe 14, gegen den er in Folge des Eingriffs zwischen dem Fangbügel 94 und dem Fanghaken 92 in dichtende Anlage gedrückt wird, die über nicht dargestellte Dichtungen vermittelt wird.

Figur 9 zeigt die Anordnung gemäß Figur 8 bei in Gegenuhrzeigersinn verschwenktem Spannbügel 20 und über eine Lagerung in ihren hinteren Bereich im Uhrzeigersinn verschwenkter Heckklappe 14.

Eine Anlenkung der Heckklappe 14 an der Fahrzeugkarosserie derart, dass die Heckklappe 14 einerseits, wie in Figur 9 gezeigt, um eine Lagerung in ihrem rückwärtigem Bereich in Uhrzeigerrichtung schwenkbar ist und um die Lagerung in ihrem vorderen Bereich in Gegenuhrzeigerrichtung schwenkbar ist (Figur 1) ist an sich bekannt und wird daher nicht erläutert.

Die Schwenkbarkeit der Heckklappe in ihrer Stellung gemäß Figur 9 ist im dargestellten Beispiel notwendig, damit das Faltverdeck 16, das verhältnismäßig lange, nicht im Einzelnen dargestellte Gestängeteile aufweist, in seine voll geöffnete Stellung gemäß Figur 10 bewegt werden kann.

Zum Öffnen des Faltverdecks 16 wird die Heckklappe 14 zunächst in die Stellung gemäß Figur 9 verschwenkt, wobei der Fangbügel 94 außer Eingriff mit dem Fanghaken 92 kommt, so dass der Spannbügel 20 beispielsweise in Folge der Verdeckspannung in Gegenuhrzeigerrichtung verschwenkt. Das Verdeck 16 wird anschließend in an sich bekannter Weise geöffnet, wobei sich die seitlichen Gestängeteile unter die Fahrzeuggürtellinie in den Heckbereich bewegen. Der Spannbügel 20 wird dabei in Uhrzeigerrichtung verschwenkt und kann sich unter die Gürtellinie des Fahrzeugs bewegen. Die Hutablage 96 kann mittels eines Mechanismus in die dargestellte abgesenkte Position gemäß Figur 10 gebracht werden.

Figur 11 zeigt einen Betriebszustand, bei dem die Rükkenlehne 98 auf die Sitzlehne 102 geklappt ist, so dass die nach oben zeigende Rückseite der Rückenlehne 98 und die Oberseite des Tanks 100 eine etwa ebene Fläche bilden, auf der ein sperriges, den bis in den Innenraum des Fahrzeugs vergrößerten Gepäckraum füllendes Gepäckstück 106 abgelegt werden kann.

Es versteht sich, dass die Hutablage 96, die das Einladen von Gepäck in der Stellung gemäß Figur 11, in der der Spannbügel 20 in Gegenuhrzeigerrichtung verschwenkt ist, behindert, entfernt werden kann, oder aber die Hutablage 96 derart ausgebildet sein kann, dass sie in den Spannbügel 20 eingehängt ist, so dass sie sich zusammen mit dem Spannbügel 20 anhebt. Beim Schließen der Heckklappe 14 aus der Stellung gemäß Figur 11 gelangt der Fangbügel 94 wiederrum in Eingriff mit dem Fanghaken 92, so dass der Spannbügel 20 unter Spannung des Verdecks abwärts verschwenkt wird.

Figur 12 zeigt die aus der Stellung gemäß Figur 11 erreichte Stellung bei vollständig geschlossener Heckklappe 14.

Figur 13 zeigt einen der Figur 11 entsprechenden Betriebszustand des Fahrzeugs, wobei die Heckklappe 14 jedoch in Uhrzeigerrichtung verschwenkt ist, damit das Verdeck 16 in die Stellung gemäß Figur 10 gebracht und voll geöffnet werden kann. Auf diese Weise lässt sich ein bis in den Innenraum reichender Gepäckraum bilden, in dem flache und sehr lange Gegenstände aufgenommen werden können.

Figur 14 zeigt eine Aufsicht auf das Fahrzeug im Zustand der Figur 12, wobei das Verdeck mit Ausnahme des Spannbügels 20 nicht dargestellt ist.

Wie ersichtlich, ist durch geeignete Konstruktion des Hinterwagens ohne eine strukturelle Rückwand hinter der bzw. den Rücklehnen 98, sondern beispielsweise mit einem unterhalb der Oberseite des Tanks bleibenden Querträger 108, der seitlich aufragende Konsolen 110 bildet, an denen die Lagerungen der Heckklappe und des Spannbügels befestigt sind, ein Durchlademaß D möglich, das durch den Abstand der Konsolen 110 gegeben ist. Vorteilhaft weisen die Konsolen 110 Aufnahmeen 112 für einen starren oder in an sich bekannter Weise im Fall einer Gefahrensituation ausfahrbaren Überrollbügel 114 (in den anderen Figuren nicht dargestellt) auf, der auf diese Weise einer Durchladung nicht entgegensteht.

Wie aus Figur 14 weiter ersichtlich, sind vorteilhafter Weise zwei oder mehr Fanghaken 92 und Fangbügel 94 vorgesehen.

Mit der geschilderten Ausführungsform wird eine große Gepäckeinladeöffnung sowie eine hohe Durchladebreite ermöglicht. Die Hutablage 96 kann beispielsweise komplett herausnehmbar sein, so dass bei geschlossenem Verdeck in Kombination mit umgeklappten Rücksitzlehnen eine maximale Ladekapazität zur Verfügung steht. Die Hutablage 96 kann beispielsweise von Hand oder motorisch aus ihrer angehobenen Position in ihre abgesenkte Position bewegt werden, wobei die abgesenkte Position von einem Sensor erfasst werden kann, der einen Freiraum für die Ablage des Verdecks anzeigt. Dies ist bei motorischer Betätigung des Verdecks besonders vorteilhaft.

Die geschilderten Bewegungen des Spannbügels, des Verdecks, der Heckklappe und gegebenenfalls der Hutablage können rein manuell betätigt erfolgen. Durch den Eingriff zwischen der Heckklappe 14 und dem Spannbügel 20 mit Hilfe der im dargestellten Beispiel durch die Fanghaken und Fangbügel gebildeten Eingriffsvorrichtung ist eine gesonderte Bewegung des Spannbügels 20 in die das Verdeck spannende Endstellung nicht erforderlich, sondern die Endbewegung erfolgt direkt durch das Schließen der Heckklappe 14. Die Achsen, um die sich die Heckklappe und/oder der Spannbügel bewegen, können durch entsprechende Mehrgelenkscharniere sich kinematisch verlagern, so dass ein sicherer Eingriff zwischen dem Fanghaken 92 und dem Fangbügel 94 gewährleistet ist, auch wenn sich der Spannbügel 20 noch in einer gegenüber seiner Ruhelage deutlich verschwenkten Position befindet. Desweiteren können für das Verschwenken des Spannbügels 20, der Heckklappe 14 und gegebenenfalls die Bewegung der Hutablage 96 und/oder das Umklappen der Rückenlehnen 98 Aktoren vorgesehen sein, die von einem Steuergerät koordiniert angesteuert werden.

Die Merkmale der beispielhaft geschilderten Ausführungsformen können, sofern der jeweils erzielte Zweck erfüllt wird, abgeändert und in unterschiedlicher Weise miteinander kombiniert werden. Beispielsweise kann ein Eingriffsmechanismus mit Fanghaken und Fangbügel auch bei der erstgeschilderten Ausführungsform vorhanden sein. Bei der zweitgenannten Ausführungsform können der Spannbügel und die Heckklappe derart ausgebildet sein, dass die Heckklappe 14 den Spannbügel 20 von hinten und oben übergreift, was ein besonders elegantes Aussehen des Fahrzeugs ergibt.

### Bezugszeichen

- 10: Seitenteil
- 14: Heckklappe
- 18: Heckscheibe
- 22: Oberseite
- 26: Gelenkmechanismus
- 32: Radhaus
- 36: Innenblech
- 40: Rand
- 44: Gelenk
- 48: Gelenk
- 52: Gelenk
- 56: Arm
- 60: Gasdruckfeder
- 64: Gelenk
- 68: Gelenk
- 72: Koppelhebel
- 76: Ausnehmung
- 80: Führungsfläche
- 83: Schrägung
- 86: Gelenk
- 90: Achse
- 94: Fangbügel
- 98: Rückenlehne
- 102: Sitzlehne
- 108: Querträger
- 112: Aufnahme
- 12: Heckabschlussteil
- 16: Faltverdeck
- 20: Spannbügel
- 24: Heckwand
- 30: Gelenkvorrichtung
- 34: Außenblech
- 38: Heckabschlussträger
- 42: Hebel
- 46: Versteifungsteil
- 50: Lagerträger
- 54: Schwenkhebel
- 58: Arm
- 62: Lagerung
- 66: Schwenkhebel
- 70: Gelenk
- 74: Zapfen
- 78: Rolle
- 82: Verriegelungshebel
- 84: Betätigungshebel
- 88: Ausnehmung
- 92: Fanghaken
- 96: Hutablage
- 100: Kraftstofftank
- 106: Gepäckstück
- 110: Konsole
- 114: Überrollbügel

## Patentansprüche

1. Cabriolet-Fahrzeug mit einem Faltverdeck (16) und einer in ihrem geschlossenen Zustand mit ihrem Vorderrand im Bereich des Hinterrandes des geschlossenen Faltverdecks (16) angeordneten, beidseitig fahrzeugfest gelagerte Heckklappe (14), **dadurch gekennzeichnet, dass** der Hinterrand des Faltverdecks (16) an einem beidseitig fahrzeugfest gelagerten Spannbügel (20) befestigt ist, der während der Öffnung der Heckklappe (14) oder bei geöffneter Heckklappe in eine aufwärts verschwenkte Stellung bewegbar ist, so dass eine Öffnung zum Beladen eines unter der Heckklappe und zumindest bei geschlossenem Faltverdeck unterhalb des Spannbügels angeordneten Gepäckraums vergrößert ist.

2. Cabriolet-Fahrzeug nach Anspruch 1 **dadurch gekennzeichnet, dass** zwischen der Heckklappe (14) und dem Spannbügel (20) eine Gelenkvorrichtung (30) angeordnet ist, die beim Öffnen der Heckklappe den Spannbügel aufwärts schwenkt.

3. Cabriolet-Fahrzeug nach Anspruch 1 **dadurch gekennzeichnet, dass** der Spannbügel (20) bei offener Heckklappe (14) unabhängig von einer Verschwenkung der Heckklappe schwenkbar ist.

4. Cabriolet-Fahrzeug nach einem der Ansprüche 1 bis 3 **dadurch gekennzeichnet, dass** zwischen dem Vorderrand der Heckklappe (14) und dem Spannbügel (20) eine Eingriffsvorrichtung (92, 94) wirksam ist, die den Spannbügel beim Schließen der Hecklappe abwärts in seine das Faltverdeck spannende Stellung schwenkt.

5. Cabriolet-Fahrzeug nach Anspruch 4 **dadurch gekennzeichnet, dass** die Eingriffsvorrichtung einen am Spannbügel befestigten Fanghaken (92) enthält, der beim Schließen der Heckklappe von einem an dieser befestigten Fangbügel (94) erfasst wird.

6. Ein Cabriolet-Fahrzeug nach Anspruch 4 oder 5 **dadurch gekennzeichnet, dass** die Heckklappe (14) und der Spannbügel (20) etwa gleichachsig fahrzeugfest gelagert sind.

7. Gelenkvorrichtung für ein Cabriolet-fahrzeug nach Anspruch 1, 8, **dadurch gekennzeichnet, dass** sie zwischen der Heckklappe (14) und dem Spannbügel (20) anordnbar ist unit **dadurch** bein öffnen der Heckklappe den Spunnpügel aufwärts schwenkt*,* wobei die Gelenkvorrichtung (30) derart ausgebildet ist, dass der Hinterrand des Spannbügels (20) beim Öffnen der Heckklappe zunächst schwach und dann stärker angehoben wird.

8. Gelenkvorrichtung nach Anspruch 2 oder 7, **dadurch gekennzeichnet, dass** die Gelenkvorrichtung eine Koppeleinrichtung (72, 74, 78, 80) enthält, welche die durch die Gelenkvorrichtung (30) hergestellte Gelenkverbindung zwischen der Heckklappe (14) und dem Spannbügel (20) bei geöffnetem Faltverdeck (16) und **dadurch** abgesenktem Spannbügel löst.

9. Gelenkvorrichtung nach Anspruch 2 oder 7 **dadurch gekennzeichnet, dass** die Gelenkvorrichtung einen fahrzeugfest gelagerten ersten Schwenkhebel (54) enthält, der gelenkig mit einem an der Heckklappe (14) gelagerten zweiten Schwenkhebel (66) verbunden ist, und einen an dem Spannbügel (20) schwenkbar gelagerten Koppelhebel (72) enthält, der schwenkbar mit dem ersten Schwenkhebel (54) verbunden ist.

10. Gelenkvorrichtung nach Anspruch 7 und 9, wobei die gegenseitigen Lagen von Schwenkhebel (54, 66) und Koppelhebel (72) derart sind, dass ein Verschwenken der Heckklappe (14) aus deren Schließstellung heraus zunächst nur zu einem kleinen Verschwenken des Spannbügels (20) in Richtung einer Anhebung von dessen Hinterrand und dann zu einem zunehmend stärkeren Verschwenken führt.

11. Gelenkvorrichtung nach Anspruch 10, wobei der erste Schwenkhebel (54) zwei etwa rechtwinklig abgebogene Arme (56, 58) aufweist, dessen längerer an seinem freien Ende mit dem zweiten Schwenkhebel (66) verbunden ist und dessen kürzerer an seinem freien Ende mit dem Koppelhebel (72) verbunden ist, der erste Schwenkhebel (54) im Bereich zwischen den Armen fahrzeugfest gelagert ist und die Lagerung (70) des Koppelhebels (72) am Spannbügel (20) auf der von der Lagerung (74) des Koppelhebels am ersten Schwenkhebel abgewandten Seite der fahrzeugfesten Lagerung (52) des ersten Schwenkhebels und etwa auf einer Linie liegt, die die Stellen der fahrzeugfesten Lagerung (52) des ersten Schwenkhebels und der Lagerung des Koppelhebels (74) am ersten Schwenkhebel verbindet.

12. Gelenkvorrichtung nach Anspruch 8 und einem der Ansprüche 9 bis 11, wobei die Verbindung zwischen dem Koppelhebel (72) und dem ersten Schwenkhebel (54) bei geschlossener Heckklappe (14) durch Verschwenken des Spannbügels (20) in Gegenrichtung zur Öffnungsrichtung der Heckklappe (14) lösbar ist.

13. Gelenkvorrichtung nach Anspruch 12, wobei der Koppelhebel (72) beim Verschwenken des Spannbügels (20) in zur Öffnungsrichtung der Heckklappe (14) entgegengesetzter Richtung durch Abtasten einer Führungsfläche (80) verschwenkt wird und ein am Koppelhebel vorgesehener Zapfen (74), der die Lagerung des Koppelhebels am ersten Schwenkhebel (54) bildet, außer Eingriff mit einer am ersten Schwenkhebel ausgebildeten Ausnehmung (82) kommt.

14. Gelenkvorrichtung nach Anspruch 13, wobei eine Verriegelungsvorrichtung (82, 84) vorgesehen ist, die den Eingriff zwischen dem Zapfen (74) und der Ausnehmung (76) bei angehobener Heckklappe (14) verriegelt.

15. Gelenkvorrichtung nach einem der Ansprüche 7 bis 14, wobei der Spannbügel (20) über einen am Fahrzeug gelagerten Hebel (42) am Fahrzeug gelagert ist.

## Claims

1. Convertible vehicle having a folding convertible top (16) and a luggage compartment lid (14) borne on both sides in a vehicle-affixed manner and disposed in its closed state with its forward edge in the area of the rear edge of the closed folding convertible top (16), **characterised in that** the rear edge of the folding convertible top (16) is affixed to a tensioning bow (20) borne on both sides in a vehicle-affixed manner, the tensioning bow is movable into an upwardly pivoted position during the opening of the luggage compartment lid or when the luggage compartment lid is opened, so that an opening for loading of a luggage compartment, which is disposed under the luggage compartment lid and under the tensioning bow at least when the folding convertible top is closed, is enlarged.

2. Convertible vehicle according to claim 1 **characterised in that** a hinge device (30) is disposed between the luggage compartment lid (14) and the tensioning bow (20), which hinge device upwardly pivots the tensioning bow when opening the luggage compartment lid.

3. Convertible vehicle according to claim 1 **characterised in that** the tensioning bow (20) is pivotable independent of a pivoting of the luggage compartment lid when the luggage compartment lid (14) is open.

4. Convertible vehicle according to one of claims 1 to 3 **characterised in that** an engagement device (92, 94) is operative between the front edge of the luggage compartment lid (14) and the tensioning bow (20), which engagement device pivots upwardly into its position tensioning the folding convertible top when closing the luggage compartment lid.

5. Convertible vehicle according to claim 4 **characterised in that** the engagement device includes a catch hook (92) affixed to the tensioning bow, which catch hook is grasped by a catch bracket (94) when closing the luggage compartment lid, the catch bracket (94) being affixed to the luggage compartment lid.

6. Convertible vehicle according to claim 4 or 5 **characterised in that** the luggage compartment lid (14) and the tensioning bow (20) are approximately co-axially borne in a vehicle-affixed manner.

7. Hinge device for a convertible vehicle according to claim 1 **characterised in that** it is arrangeable between the luggage compartment lid (14) and the tensioning bow (20) and thereby upwardly pivots the tensioning bow when opening the luggage compartment lid, wherein the hinge device (30) is constructed such that the rear edge of the tensioning bow (20) is raised initially slightly and then more strongly when opening the luggage compartment lid.

8. Hinge device according to claim 2 or 7, **characterised in that** the hinge device includes a coupling device (72, 74), which releases the hinge connection produced by the hinge device (30) between the luggage compartment lid (14) and the tensioning bow (20) when the folding convertible top (16) is opened and thereby the tensioning bow is lowered.

9. Hinge device according to claim 2 or 7 **characterised in that** the hinge device includes a first pivot lever (54) borne in a vehicle-affixed manner, which first pivot lever is hingedly connected with a second pivot lever (66) borne on the luggage compartment lid (14) and which first pivot lever includes a coupling lever (72) pivotably borne on the tensioning bow (20), which coupling lever (72) is pivotably connected with the first pivot lever (54).

10. Hinge device according to claim 7 and 9, wherein the respective positions of pivot lever (54, 66) and coupling lever (72) are such that a pivoting of the luggage compartment lid (14) from its closed position initially leads to only a small pivoting of the tensioning bow (20) in the direction of raising its rear edge and then to an increasingly stronger pivoting.

11. Hinge device according to claim 10, wherein the first pivot lever (54) includes two approximately right-angled bent arms (56, 58), the longer of which is connected on its free end with the second pivot lever (66), and the shorter of which is connected on its free end with the coupling lever (72), the first pivot lever (54) is borne in a vehicle-affixed manner in the area between the arms and
the bearing connection (70) of the coupling lever (72) on the tensioning bow (20) is disposed on the side of the vehicle-affixed bearing connection (52) that faces away from the bearing connection (74) of the coupling lever on the first pivot lever, and is disposed nearly on a line that connects the locations of the vehicle-affixed bearing connection (52) of the first pivot lever and the bearing connection of the coupling lever (74) on the first pivot lever.

12. Hinge device according to claim 8 and one of claims 9-11, wherein the connection between the coupling lever (72) and the first pivot lever (54) is releasable when the luggage compartment lid (14) is closed by pivoting the tensioning bow (20) in the counter direction to the opening direction of the luggage compartment lid (14).

13. Hinge device according to claim 12, wherein the coupling lever (72) is pivoted when pivoting the tensioning bow (20) in the direction opposite to the opening direction of the luggage compartment lid (14) by contacting a guide surface (80), and a pin (74) provided on the coupling lever, which pin forms the bearing connection of the coupling lever on the first pivot lever (54), comes out of engagement with a recess (82) formed on the first pivot lever.

14. Hinge device according to claim 13, wherein a latching device (82, 84) is provided that latches the engagement between the pin (74) and the recess (76) when the luggage compartment lid (14) is raised.

15. Hinge device according to one of claims 7 to 14, wherein the tensioning bow (20) is borne on the vehicle via a lever (42) borne on the vehicle.

## Revendications

1. Véhicule cabriolet comportant une capote pliante (16) et un coffre (14) monté des deux côtés solidairement sur le véhicule, et qui, à l'état fermé, vient avec son bord avant dans la région du bord arrière de la capote fermée (16),
**caractérisé en ce que**
le bord arrière de la capote pliante (16) est fixé à un arceau (20) solidaire des deux côtés du véhicule, et au cours de l'ouverture du coffre (14) ou lorsque le coffre (14) est ouvert, bascule dans une position remontée pour augmenter l'ouverture de chargement de l'enceinte à bagages sous le coffre et en dessous de l'arceau au moins lorsque la capote pliante est fermée.

2. Véhicule cabriolet selon la revendication 1,
**caractérisé par**
un dispositif articulé (30) entre le coffre (14) et l'arceau (20), ce dispositif articulé basculant l'arceau vers le haut lors de l'ouverture du coffre.

3. Véhicule cabriolet selon la revendication 1,
**caractérisé en ce que**
lorsque le coffre (14) est ouvert, l'arceau (20) est basculé indépendamment du mouvement de basculement du coffre.

4. Véhicule cabriolet selon l'une des revendications 1 à 3,
**caractérisé par**
un dispositif de prise (92, 94) entre le bord avant du coffre (14) et l'arceau (20), ce dispositif basculant l'arceau en l'abaissant dans sa position de tension de la capote pliante lors de la fermeture du coffre.

5. Véhicule cabriolet selon la revendication 4,
**caractérisé en ce que**
le dispositif de prise comporte un crochet (92) fixé à l'arceau tendeur et qui, lors de la fermeture du coffre, est pris par un arceau de prise (94) fixé au coffre.

6. Véhicule cabriolet selon la revendication 4 ou 5,
**caractérisé en ce que**
le coffre (14) et l'arceau tendeur (20) sont montés sensiblement de façon coaxiale sur le véhicule.

7. Dispositif articulé pour un véhicule cabriolet selon la revendication 1,
**caractérisé en ce qu'**
il est installé entre le coffre (14) et l'arceau tendeur (20) et ainsi, à l'ouverture du coffre, l'arceau tendeur bascule en remontant et le dispositif articulé (30) est réalisé pour que le bord arrière de l'arceau tendeur (20) soit tout d'abord faiblement soulevé lors de l'ouverture du coffre puis soit ensuite soulevé plus fortement.

8. Dispositif articulé selon la revendication 2 ou 7,
**caractérisé en ce que**
le dispositif articulé comporte une installation de couplage (72, 74, 78, 80) qui réalise la liaison articulée par le dispositif articulé (30) entre le coffre (14) et l'arceau tendeur (20) lorsque la capote pliante (16) est ouverte et libère ainsi l'arceau tendeur, abaissé.

9. Dispositif articulé selon la revendication 2 ou 7,
**caractérisé en ce que**
le dispositif articulé comporte un premier levier pivotant (54) monté solidairement sur le véhicule, relié de façon articulée à un second levier basculant (66) monté sur le coffre (14) ainsi qu'un levier de couplage (72) monté pivotant sur l'arceau (20) et qui est relié de façon pivotante au premier levier pivotant (54).

10. Dispositif articulé selon la revendication 7 ou 9,
dans lequel
les positions réciproques du levier pivotant (54, 66) et du levier de couplage (72) sont telles que le basculement du coffre (14) à partir de sa position de fermeture se traduit tout d'abord seulement par un petit basculement de l'arceau tendeur (20) dans le sens du soulèvement de son bord arrière puis, par un basculement d'amplitude croissante.

11. Dispositif articulé selon la revendication 10,
selon lequel
le premier levier basculant (54) comporte deux bras (56, 58) recourbés sensiblement à l'équerre et dont le bras le plus long est relié à son extrémité libre au second levier basculant (66) et le bras le plus court est relié par son extrémité libre au levier de couplage (72), le premier levier basculant (54) étant monté de manière solidaire au véhicule dans la région entre les bras, et
le palier (70) du levier de couplage (72) est situé sur l'arceau tendeur (20), sur le côté du palier (52) solidaire du véhicule pour le premier levier basculant et sensiblement sur une ligne, sur le côté opposé à celui du palier (74) du levier de couplage sur le premier levier basculant, et cette ligne relie les positions du palier (52) solidaire du véhicule pour le premier levier basculant et le palier du levier de couplage (74) sur le premier levier basculant.

12. Dispositif articulé selon la revendication 8, et l'une des revendications 9 à 11,
selon lequel
lorsque le coffre (14) est fermé, la liaison entre le levier de couplage (72) et le premier levier basculant (54) se libère par basculement de l'arceau tendeur (20) dans la direction opposée à la direction d'ouverture du coffre (14).

13. Dispositif articulé selon la revendication 12,
selon lequel
lors du basculement de l'arceau tendeur (20) le levier de couplage (72) est basculé dans la direction opposée à la direction d'ouverture du coffre (14), par le contact d'une surface de guidage (80) et un goujon (74) prévu sur le levier de couplage et qui constitue le palier du levier de couplage sur le premier levier basculant (54) se dégage de sa prise dans une cavité (82) réalisée sur le premier levier basculant.

14. Dispositif articulé selon la revendication 13,
selon lequel
il est prévu un dispositif de verrouillage (82, 84) qui verrouille la prise entre le goujon (74) et la cavité (76) lorsque le coffre (14) est relevé.

15. Dispositif articulé selon l'une des revendications 7 à 14,
selon lequel
l'arceau tendeur (20) est monté sur le véhicule par l'intermédiaire d'un levier (42) monté sur le véhicule.
